# EUROPÄISCHE PATENTANMELDUNG

(11) **EP 1 134 542 A2**
(43) Veröffentlichungstag der Anmeldung: **19.09.2001**
(21) Anmeldenummer: 01710007.4
(22) Anmeldetag: 08.02.2001
(51) Int. Cl.: G01B 11/24

(54) **Vorrichtung zur Prüfung und/oder Vermessung von Prüflingen**

(30) Priorität: 13.03.2000 DE 10011318
(71) Anmelder: visicontrol Gesellschaft für elektronische Bildverarbeitung mbH, 88250 Weingarten (DE)
(72) Erfinder: Hecht, Walter, 88214 Ravensburg (DE); Jauch, Volker, 88255 Baienfurt (DE); Knam, Andreas, 88250 Weingarten (DE)
(74) Vertreter: Roth, Klaus

(57) **Zusammenfassung**

Es wird eine Vorrichtung (1) zur Prüfung und/oder Vermessung von Prüflingen mittels einer Bildverarbeitungsanlage vorgeschlagen, bei der die Prüflinge auf einem Transportband (2) liegen und im Durchleuchtverfahren aufgenommen werden. Die erfindungsgemäße Vorrichtung soll kostengünstiger herzustellen sein und dabei weniger Störungen durch Lichteffekte für in der Nähe der Vorrichtung befindliche Personen verursachen. Dies wird erfindungsgemäß dadurch erreicht, dass die Beleuchtungseinheit wenigstens eine Infrarot-Lichtquelle (5) umfasst.

## Beschreibung

Die Erfindung betrifft eine Vorrichtung zur Prüfung und/oder Vermessung von Prüflingen nach dem Oberbegriff des Anspruchs 1.

Bislang sind zur Prüfung und/oder Vermessung von Prüflingen Vorrichtungen bekannt geworden, bei denen eine Bildaufnahme des Prüflings während des freien Falls oder während einer Gleitbewegung auf einer transparenten Gleitschiene aufgenommen wird. Bei derartigen Vorrichtungen stellt sich das Problem, dass sich die Prüflinge in einer definierten Lage vor der Bildkamera bewegen müssen. Weiterhin ist eine entsprechend aufwendige Mechanik erforderlich, um die Prüflinge vereinzelt vor die Kamera zu bringen.

Daher hat man in jüngster Zeit Anstrengungen unternommen, um im sichtbaren Bereich transparente Transportbänder zu schaffen, so dass eine Durchleuchtung des Transportbandes im sichtbaren Bereich möglich ist und somit eine Bildaufnahme der auf dem Transportband ruhenden Prüflinge gemacht werden kann.

Aufgrund der geringen Stückzahlen für derartige Spezialanfertigungen von Transportbändern sind diese nur unter entsprechendem Kostenaufwand erhältlich. Darüber hinaus ist bei solchen Anlagen die Beleuchtung störend, insbesondere wenn die Bildaufnahmen in einem Blitzlichtbetrieb gemacht werden, wodurch sich im Dauerbetrieb eine Stroboskopbeleuchtung ergibt, die von Personen in der Umgebung einer solchen Vorrichtung als störend empfunden wird.

Demgegenüber hat die Erfindung die Aufgabe, eine Vorrichtung vorzuschlagen, die kostengünstiger herzustellen ist und die ihrerseits keine unangenehmen Begleiterscheinungen für Personen in der Umgebung der Anlage verursacht.

Diese Aufgabe wird ausgehend von einer Vorrichtung der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, dass die Beleuchtungseinheit eine Infrarot-Lichtquelle umfasst.

Infrarotlicht befindet sich außerhalb des sichtbaren Bereichs und kann daher auch im Stroboskopbetrieb nicht als störend von Personen in der Umgebung der Vorrichtung wahrgenommen werden. Darüber hinaus hat es sich überraschend gezeigt, dass eine Vielzahl von bereits in großer Stückzahl im Handel befindlicher Transportbänder durchlässig für Infrarotlicht sind. Die Verwendung von Infrarotlicht ermöglicht daher zugleich die Verwendung derartiger handelsüblicher, kostengünstiger Transportbänder, wodurch die Fertigungskosten einer erfindungsgemäßen Vorrichtung deutlich reduziert werden.

In einer vorteilhaften Ausführungsform der Erfindung wird eine Kamera verwendet, die ausschließlich zur Detektion des von der Beleuchtungseinheit abgegebenen Infrarotlichtes geeignet ist. Auf diese Weise können Störeinflüsse minimiert werden. Solche Störeinflüsse können beispielsweise in Form von Tageslicht oder durch die Raumbeleuchtung vorliegen. Sofern der Frequenzbereich dieser Lichtquellen durch die Kamera nicht erfasst wird, können dementsprechend auch keine Störsignale hervorgerufen werden.

Eine weitere vorteilhafte Möglichkeit, Störeinflüsse zu minimieren, besteht darin, vor der Kamera ein für Infrarotlicht durchlässiges Filter anzubringen. Auf diese Weise kann auch bei Verwendung einer für ein breites Frequenzband, insbesondere auch im sichtbaren Bereich geeignete Kamera der oben angeführte Störeinfluss von sichtbarem Licht minimiert werden.

In einer Weiterbildung der Erfindung wird zusätzlich ein Diffusor zwischen der Beleuchtungseinheit und dem Prüfling vorgesehen. Ein Diffusor sorgt für eine homogene Beleuchtung des Prüflings, so dass insbesondere Reflexionen oder Schattenwürfe ausgeschlossen sind. Ein mit diffusem Licht beleuchteter Prüfling ist gleichmäßig über seinen gesamten Konturenverlauf durch die entsprechende Kamera zu erfassen.

In einer Weiterbildung der Erfindung wird der Diffusor für das Infrarotlicht durch das Transportband gebildet. Auf diese Weise entfällt der Aufwand für einen separaten Diffusor. Es hat sich darüber hinaus bereits gezeigt, dass einige handelsübliche Transportbänder diese Funktion des Diffusors in ausreichendem Maße erfüllen.

In einer weiteren vorteilhaften Ausführungsform wird eine Gewebeschicht im Transportband vorgesehen. Ein solches Gewebe kann zweierlei Funktionen erfüllen. Zum einen ist ein solches Gewebe in der Lage, die Funktion eines Diffusors wahrzunehmen, zum anderen kann durch ein Gewebe die Zugbelastung eines Transportbandes bzw. das Dehnungsverhalten eines Transportbandes deutlich verbessert werden. Daher sind bei vielen handelsüblichen Transportbändern bereits solche Gewebeeinlagen vorgesehen.

In einer besonderen Ausführungsform der Erfindung umfasst das Transportband ein Polyamidgewebe und mindestens eine Polyamidtransportschicht. Ein derart ausgebildetes Transportband hat sich bereits in Testversuchen für den erfindungsgemäßen Einsatz bewährt. Es zeigt eine ausreichende Durchlässigkeit für das gewünschte Infrarotlicht zur Beleuchtung der Prüflinge und sorgt zugleich für eine ausreichend diffuse Beleuchtung. Weiterhin sind solche Transportbänder mit ausreichenden mechanischen Eigenschaften im Handel erhältlich.

Vorzugsweise werden für die Beleuchtung eine oder mehrere Leuchtdioden verwenden. Der Einsatz einer Leuchtdiode hat in Verbindung mit der erfindungsgemäß ausgewählten Infrarot-Beleuchtung den besonderen Vorteil, dass Infrarot-Leuchtdioden bei vergleichbaren Kosten mit erheblich größerer Leistung erhältlich sind als Leuchtdioden im sichtbaren Bereich. Daher ist insbesondere die Kombination einer Infrarot-Beleuchtung unter Verwendung einer Leuchtdiode dazu geeignet, die Kosten zur Herstellung einer erfindungsgemäßen Vorrichtung weiter zu reduzieren.

Darüber hinaus wird in einer vorteilhaften Ausführungsform eine Flächenbeleuchtung zur Beleuchtung der Prüflinge vorgesehen. Eine solche Flächenbeleuchtung wird vorzugsweise durch ein sogenanntes Leuchtdioden-Array erzielt, d. h. es werden mehrere Leuchtdioden in einer oder mehreren Reihen nebeneinander angeordnet.

In einer Weiterbildung der Erfindung werden zwei Transportbänder verwendet, die mit ihren Transportebenen unter einem vorgegebenen Winkel stehen. Dies hat den Vorteil, dass Prüflinge mit einer nicht flachen Auflagenfläche, beispielsweise Drehteile, in einer definierten Lage aufgelegt werden können. Sie befinden sich hierbei mit ihrer Achse in der winkelhalbierenden Ebene zwischen den beiden gewinkelt stehenden Transportbändern.

Neben einer definierten Lage solcher Prüflinge mit nicht ebener Auflagefläche kann die beschriebene gewinkelte Anordnung zweier Transportbänder weiterhin dazu verwendet werden, um die Prüflinge seitlich zu beleuchten und seitlich mit der Kamera auf die Prüflinge zu schauen. So werden die Prüflinge quasi freischwebend von der Kamera erfasst, obwohl sie auf Transportbändern aufliegend befördert werden. Dabei steht die Kamera unter einem Blickwinkel von 90° zur Achse der Prüflinge, so dass die in dieser Projektionsrichtung sichtbaren Kanten zu vermessen sind.

Eine weitere Möglichkeit, diesen Blickwinkel der Kamera zu verwirklichen, besteht darin, das Transportband bzw. zwei zueinander gewinkelte Transportbänder in Transportrichtung zu krümmen, so dass sich der Winkel zwischen der Achse des Prüflings und der Kamerarichtung ändert. Dabei kann das gewünschte Bild in dem Moment aufgenommen werden, wenn dieser Winkel rechtwinklig ist. Diese Ausführungsform hat den Vorteil, dass die Kamera oberhalb des Transportbandes angeordnet werden kann und somit keine Abbildung durch das Transportband hindurch erfolgen muss.

In einer Weiterbildung dieser Ausführungsform können ein ebenes Band und zwei gewinkelte Transportbänder hintereinander angeordnet werden. Auf diese Weise können Prüflinge mit unterschiedlichen Auflageflächen nacheinander auf die Transportbänder aufgelegt und mit Hilfe von Bilderfassungseinheiten geprüft werden. So können beispielsweise Drehteile mit einer flachen Stirnseite zunächst auf das ebene Transportband aufgelegt und die Umfangskonturen durch eine senkrecht zum Transportband gerichtete Blickrichtung vermessen werden. Anschließend kann ein solches Drehteil auf zwei zueinander gewinkelte Transportbänder übergeben werden, wobei so gekippt wird, dass es umfangsseitig auf beiden Transportbändern aufliegt. In dieser Stellung kann die oben angeführte Seitenansicht eines solchen Drehteils aufgenommen werden.

Bei entsprechend flexiblen Transportbändern wäre auch eine Anordnung denkbar, bei der ein Transportband zunächst horizontal verläuft und anschließend verdreht wird, so dass sich eine geneigte Transportebene ergibt. Auf diese Weise könnte mit zwei nebeneinander verlaufenden Transportbändern zunächst eine Transportebene erzeugt werden, die im weiteren Verlauf der Transportrichtung in eine V- oder L-Form übergeht.

Sofern die Reibung zwischen Prüflingen und Transportband nicht für eine ausreichend stabile Lage auf dem Transportband ausreicht und ein sogenannter Schlupf zwischen Transportband und Prüfling entsteht, so wird in einer vorteilhaften Ausführungsform das Transportband bezüglich der Transportrichtung etwas geneigt, um einem solchen Schlupf entgegenzuwirken.

Ein Ausführungsbeispiel der Erfindung ist in der Zeichnung beschrieben und wird anhand der Figuren nachfolgend näher erläutert.

Im Einzelnen zeigen
- Fig. 1: eine schematische Darstellung einer erfindungsgemäßen Vorrichtung in der Seitenansicht,
- Fig. 2: eine mit einer erfindungsgemäßen Vorrichtung aufgenommene Bildaufnahme eines Prüflings,
- Fig. 3: ein Ausführungsbeispiel eines Transportbandes zur erfindungsgemäßen Verwendung und
- Fig. 4: ein weiteres Ausführungsbeispiel eines Transportbandes.

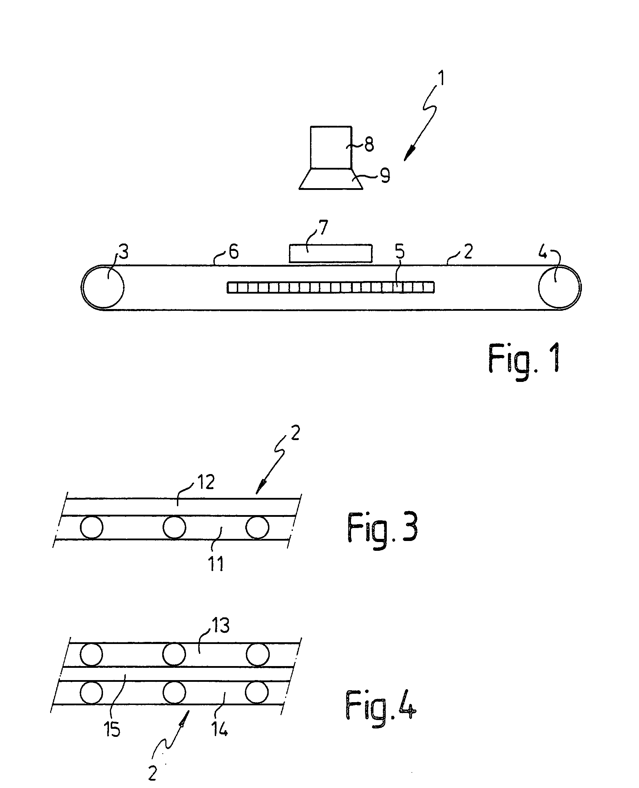

Die Vorrichtung 1 gemäß Fig. 1 umfasst ein Transportband 2, das zwischen zwei Umlenkrollen 3, 4 endlos umläuft. Im Innern des Transportbandes ist eine Leuchteinheit in Form eines LED-Arrays 5 angeordnet. Das LED-Array 5 sorgt für eine flächige Beleuchtung des oberen Bereichs 6 des Transportbands 2.

Auf dem Transportband 2 bzw. dessen oberen Bereich 6 liegt ein Prüfling 7 auf. Der Prüfling 7 wird gerade oberhalb des LED-Arrays 5 vorbeigeführt und dabei beleuchtet.

Eine Kamera 8 mit einem Objektiv 9 befindet sich in der momentanen Position des Prüflings 7 oberhalb von diesem und ist somit in der Lage, ein Bild vom Prüfling 7 aufzunehmen. Die Kamera 8 bzw. das Objektiv 9 umfasst vorteilhafterweise ein für Infrarotlicht durchlässiges Filter, so dass nur Licht von dem Infrarot-LED-Array 5 erfasst wird, Umgebungslicht jedoch keinen Einfluss auf die Bildaufnahme hat.

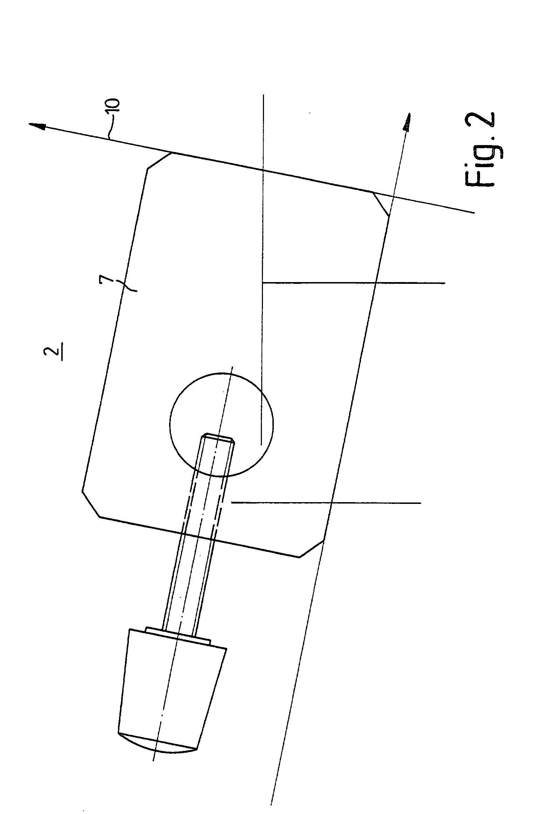

In Fig. 2 ist erkennbar, dass auf diese Weise ein auf dem Transportband 2 liegender Prüfling 7 mit scharfen Konturen erfassbar ist. Diverse Hilfslinien 10 sind bereits von Auswerteeinheit der Bildverarbeitungsanlage an den Prüfling 7 angelegt worden, um eine Vermessung durchzuführen.

Fig. 3 zeigt einen möglichen Aufbau eines erfindungsgemäßen Transportbandes 2. Das Transportband 2 umfasst eine Gewebelage 11, die von einer Transportschicht 12 bedeckt ist. Wenigstens eine der beiden Schichten 11, 12 ist vorteilhafterweise als Diffusor ausgebildet. In der Regel wird dies durch die Gewebelage 11 erfüllt sein.

Fig. 4 zeigt eine weitere Ausgestaltung eines erfindungsgemäßen Transportbandes 2, vorliegend jedoch mit zwei Gewebelagen 13, 14, die sandwichartig eine homogene Schicht 15 umschließen. Die homogene Schicht 15 kann hierbei mit entsprechenden funktionellen Eigenschaften versehen werden, beispielsweise die diffuse Funktion wahrnehmen. Auch der umgekehrte, nicht nähere dargestellte Fall wäre denkbar, dass eine Gewebeschicht 11, 13, 14 von zwei Randschichten, ähnlich der Transportschicht 12 oder der Homogenschicht 15, sandwichartig umgeben wird.

Mit Hilfe der Erfindung ist eine kostengünstige, bildverarbeitende Prüf- oder Messanlage möglich. Dies wird im Wesentlichen durch die Verwendung von Infrarotlicht bewerkstelligt, durch das überraschenderweise einige handelsübliche Transportbänder einsetzbar sind. Bislang ist man in der Entwicklung davon ausgegangen, für derartige Mess-und Prüfanlagen, auf denen der Prüfling auf dem Transportband ruht, spezielle transparente Transportbänder anfertigen zu müssen.

Darüber hinaus bietet die Verwendung von Infrarotlicht, wie bereits mehrfach erwähnt, noch den weiteren Vorteil, dass die Beleuchtung der Prüflinge von Personen in der Nähe der Anlage nicht als störend empfunden wird.

### Bezugszeichenliste:

- 1: Vorrichtung
- 2: Transportband
- 3: Umlenkrolle
- 4: Umlenkrolle
- 5: LED-Array
- 6: oberer Bereich
- 7: Prüfling
- 8: Kamera
- 9: Objektiv
- 10: Hilfslinie
- 11: Gewebelage
- 12: Transportschicht
- 13: Gewebelage
- 14: Gewebelage
- 15: homogene Schicht

## Patentansprüche

1. Vorrichtung zur Prüfung und/oder Vermessung von Prüflingen mittels einer Bildverarbeitungsanlage, wobei ein Transportband mit einer Auflageseite zur Aufnahme und zum Transport der Prüflinge sowie eine Beleuchtungseinheit auf der gegenüberliegenden Seite zur Durchleuchtung des Transportbandes vorgesehen ist und wobei eine Kamera auf die auf dem Transportband aufliegenden Prüflinge gerichtet ist, **dadurch gekennzeichnet, dass** die Beleuchtungseinheit (5) eine Infrarotlichtquelle umfasst.

2. Vorrichtung nach Anspruch 1 **dadurch gekennzeichnet, dass** die Kamera (8) an die Frequenzbandbreite der Leuchtquelle angepasst ist.

3. Vorrichtung nach einem der vorgenannten Ansprüche **dadurch gekennzeichnet, dass** ein infrarotdurchlässiges Filter vor der Kamera (8) angeordnet ist.

4. Vorrichtung nach einem der vorgenannten Ansprüche **dadurch gekennzeichnet, dass** ein Diffusor vorgesehen ist.

5. Vorrichtung nach einem der vorgenannten Ansprüche **dadurch gekennzeichnet, dass** der Diffusor in das Transportband integriert ist.

6. Vorrichtung nach einem der vorgenannten Ansprüche **dadurch gekennzeichnet, dass** das Transportband wenigstens eine Gewebelage (13) und eine Transportschicht (14) umfasst.

7. Vorrichtung nach einem der vorgenannten Ansprüche **dadurch gekennzeichnet, dass** eine Polyamidgewebelage und/oder eine Polyamidtransportschicht im Transportband vorgesehen ist.

8. Vorrichtung nach einem der vorgenannten Ansprüche **dadurch gekennzeichnet, dass** die Beleuchtungseinheit wenigstens eine IR-LED (5) umfasst.

9. Vorrichtung nach einem der vorgenannten Ansprüche **dadurch gekennzeichnet, dass** die Beleuchtungseinheit ein LED-Array (5) umfasst.

10. Vorrichtung nach einem der vorgenannten Ansprüche **dadurch gekennzeichnet, dass** zwei Transportbänder gewinkelt angeordnet sind.

11. Vorrichtung nach einem der vorgenannten Ansprüche **dadurch gekennzeichnet, dass** ein ebenes Transportband und zwei zueinander gewinkelte Transportbänder hintereinander angeordnet sind.

12. Vorrichtung nach einem der vorgenannten Ansprüche **dadurch gekennzeichnet, dass** das ebene Transportband als Vereinzelungseinheit auf dem Weg zu zwei gewinkelten Transportbändern ausgebildet ist.

13. Vorrichtung nach einem der vorgenannten Ansprüche **dadurch gekennzeichnet, dass** wenigstens ein Transportband zur Kompensation eines etwaigen Schlupfs der Prüflinge auf dem Transportband in Transportrichtung gegenüber der Horizontalen geneigt ist.
